# EUROPÄISCHE PATENTSCHRIFT

(11) **EP 3 103 057 B1**
(45) Veröffentlichungstag und Bekanntmachung des Hinweises auf die Patenterteilung: **06.11.2019**
(21) Anmeldenummer: 15701031.5
(22) Anmeldetag: 26.01.2015
(51) Int. Cl.: G06F 21/31, G06F 21/86, H04L 29/06, G07C 9/00

(54) **VERFAHREN ZUM ZUGANG ZU EINEM PHYSISCH ABGESICHERTEN RACK SOWIE COMPUTERNETZ-INFRASTRUKTUR**
METHOD FOR ACCESSING A PHYSICALLY SECURED RACK AND COMPUTER NETWORK INFRASTRUCTURE
PROCÉDÉ D'ACCÈS À UNE BAIE PHYSIQUEMENT SÉCURISÉE AINSI QU'INFRASTRUCTURE INFORMATIQUE

(30) Priorität: 06.02.2014 DE 102014101495
(43) Veröffentlichungstag der Anmeldung: 14.12.2016
(73) Patentinhaber: Fujitsu Technology Solutions Intellectual Property GmbH, 80807 München (DE)
(72) Erfinder: CLAES, Heinz-Josef, 61130 Nidderau (DE); FELDMANN, Ulrich, 59757 Arnsberg (DE)
(74) Vertreter: Epping - Hermann - Fischer
(86) Internationale Anmeldenummer: PCT/EP2015/051458
(87) Internationale Veröffentlichungsnummer: WO 2015/117850

(56) Entgegenhaltungen:
- EP-A2- 0 649 957
- CN-A- 102 346 945
- US-A1- 2003 231 102
- US-A1- 2012 314 862
- US-B1- 6 300 873

## Beschreibung

Die Erfindung betrifft ein Verfahren zum Zugang zu einem physisch abgesicherten Rack sowie eine Computernetz-Infrastruktur.

Zum Verhindern eines unberechtigten Zugriffs auf ein Rack, welches Hardware aufnehmen kann und beispielsweise in einem Rechenzentrum eingerichtet ist, existieren bereits verschiedene Lösungen. Nachteilig an diesen Lösungen ist, dass eine Zugangskontrolle meist nur zum gesamten Rechenzentrum stattfindet. Fest definierte Codes oder Schlüssel für Zugangssicherheitssysteme, beispielsweise zur Überwachung eines Zugangs zu einem Rack mit einem darin aufgenommenen datensicherheitsrelevanten Computersystem, sind nur an eine Instanz außerhalb des Racks gebunden. Dabei können beispielsweise Codes oder Schlüssel von autorisierten Personen an nicht-autorisierte Personen weitergegeben werden oder autorisierten Personen gestohlen werden. Ferner sehen einige Konzepte zur Identifikation von Personen nur übertragbare Kennungen, zum Beispiel Chip-Karten, Handys oder Smartphones, PIN-Codes, usw. vor, welche ebenfalls an nichtautorisierte Personen übergeben oder autorisierten Personen gestohlen werden können.

Das Dokument US 6,300,873 zeigt Verfahren und Vorrichtungen zur Ausgabe von Zugriffscodes durch einen Server für einen Zugang zu einem Verriegelungsmechanismus, der zum Beispiel an einem Container, an einer gesicherten Tür eines Gebäudes oder an abgesicherten Zugangspunkten eingerichtet ist.

Die Aufgabe der vorliegenden Erfindung besteht somit darin, Maßnahmen für einen gesicherten physischen Zugang auf ein physisch abgesichertes Rack zu verbessern und einen unberechtigten Zugang auf ein gesichertes Rack zu verhindern.

Diese Aufgabe wird durch ein Verfahren gemäß Anspruch 1 gelöst.

Das Verfahren umfasst die folgenden Schritte:
- Vergabe einer Auftrags-Identifikation vermittels eines Key-Computersystems, welche einen Auftrag an einen Administrator einer Administrations-Benutzergruppe für einen Zugang zum Rack kennzeichnet,
- Übermittlung der Auftrags-Identifikation von Key-Computersystem sowohl an den Administrator als auch an eine Zugangskontrolleinheit für das Rack,
- Abfrage einer Eingabe der Auftrags-Identifikation durch die Zugangskontrolleinheit,
- Prüfung der eingegebenen Auftrags-Identifikation durch die Zugangskontrolleinheit,
- Abfrage einer Eingabe einer persönlichen Zugangsidentifikation des Administrators durch die Zugangskontrolleinheit,
- Prüfung der eingegebenen persönlichen Zugangsidentifikation des Administrators durch die Zugangskontrolleinheit und
- Freigabe eines physischen Zugangssicherheitssystems für den Zugang des Administrators zum Rack, falls beide vorgehenden Prüfschritte erfolgreich waren.

Ein derartiges Verfahren hat den Vorteil, dass ein physischer Zugang zum Rack nur freigegeben wird, wenn neben einer persönlichen Identifikation des Administrators auch eine von einer unabhängigen Instanz (Key-Computersystem) vergebene Auftrags-Identifikation zur Kennzeichnung eines Auftrags an den Administrator zum Zugang zum Rack erfolgreich eingegeben wurde. Auf diese Weise wird ein physischer Zugang zum Rack von einer Information abhängig gemacht, die in einer Instanz in oder am Rack (Zugangskontrolleinheit) abgelegt sein muss und die ein Administrator nicht umgehen kann. Daneben muss sich der Administrator noch selbst authentifizieren.

Der Begriff Rack bedeutet einen Baugruppenträger, Einschubgeräteträger, Computer-Rack, Server-Rack oder allgemein Hardware-Rack zur Aufnahme bzw. Beherbergung elektronischer Datenverarbeitungskomponenten. Beispielsweise ist ein solches Rack eingerichtet, ein oder mehrere Produktions-Computersysteme aufzunehmen. Ein derartiges Rack kann ferner eine Tür zum Zugang in das Innere des Racks aufweisen, sodass eine Person physischen Zugang zu den elektronischen Komponenten innerhalb des Racks hat. Diese Tür kann über Sicherheitsmaßnahmen verriegelbar bzw. absperrbar sein, sodass nur autorisierte Benutzer Zugang erhalten.

Die Auftrags-Identifikation dient zum Kennzeichnen eines vorbestimmten, gegebenenfalls eingeschränkten Zugangs zu einem vorbestimmten Rack. Die Auftrags-Identifikation kann auch personenabhängig einen vorbestimmten Administrator festlegen. Die Auftrags-Identifikation kann beispielsweise eine Auftragsnummer, ein "Ticket" für den Administrator oder eine Art temporärer Schlüssel zum zeitlich begrenzten Zugang zum Rack oder eine Kombination davon bilden.

Eine Anwendung dieses Verfahrens ist beispielsweise bei einer Mehrzahl von Racks, zum Beispiel in Rechenzentren, denkbar, wobei beispielsweise ein oder mehrere Produktions-Computersysteme und/oder andere Hardware in der Mehrzahl von Racks eingerichtet sind. Durch die Auftrags-Identifikation kann der Auftrag an einen Administrator für einen Zugang zu einem einzelnen vorbestimmten Rack eingeschränkt werden. Zu anderen Racks hat der Administrator dann keinen Zugang. Ferner erlaubt die Vergabe einer Auftrags-Identifikation eine Dokumentation der erteilten Aufträge im Key-Computersystem, was eine Nachvollziehbarkeit erteilter Aufträge beziehungsweise durchgeführter Zugänge zu vorbestimmten Racks erhöht.

Das vorgestellte Verfahren hat somit grundsätzlich den Vorteil, dass neben einer persönlichen Zugangsidentifikation eines Administrators eine Auftrags-Identifikation für einen Zugang zum Rack abgefragt wird, welche eigens für einen Zugangsauftrag von einer unabhängigen Instanz (Key-Computersystem) generiert und an einen Administrator vergeben wird. Die Auftrags-Identifikation schränkt den Zugang des Administrators auf ein vorbestimmtes Rack ein. Auf diese Weise wird vermieden, dass ein Administrator ausschließlich aufgrund einer persönlichen Zugangsidentifikation einen Zugang zu allen Computersystemen in einem Rechenzentrum erhält.

Ferner ist ein Zugang zum Rack nur möglich, wenn die entsprechende Zugangskontrolleinheit mit der vergebenen Auftrags-Identifikation vorprogrammiert wurde. Das bedeutet, dass ein Zugang zum Rack nicht ausschließlich durch eine Instanz (Administrator) außerhalb des Racks möglich ist, sondern zusätzlich durch eine Instanz am oder im Rack (Zugangskontrolleinheit) aufgrund eigens für den Auftrag vergebener Identifikationen autorisiert werden muss.

Gerade in der Kombination einer Auftrags-Identifikation und einer persönlichen Zugangsidentifikation werden die Stärken des vorgestellten Verfahrens deutlich. Die persönliche Zugangsidentifikation schränkt eine Zugangsmöglichkeit ausschließlich auf autorisierte Personen selbst ein. Es kann unter Umständen keine andere Person geschickt werden, welche ein entsprechender Zugangsauftrag nicht erteilt wurde. Daneben schränkt die Auftrags-Identifikation den Zugang auf einen speziell vergebenen Auftrag (zeitlich, örtlich, geräte- bzw. Rack-abhängig, personenabhängig, usw.) ein. Das bedeutet, dass auch einer autorisierten Person, deren persönliche Zugangsidentifikation generell einen Zugang zum Rack erlauben würde, der Zugang verwehrt bleibt, wenn nicht konkret dieser Person ein Auftrag vermittels einer Auftrags-Identifikation erteilt worden ist. Somit erlaubt die Kombination aus persönlicher Zugangsidentifikation eines Administrators und einer eigens für einen Zugang vergebenen Auftrags-Identifikation seitens eines Key-Computersystems als unabhängige Sicherheitsinstanz ein hohes Maß an Sicherheit.

Vorteilhaft umfasst die persönliche Zugangsidentifikation des Administrators nicht-übertragbare Personen-Kenndaten. Diese Kenndaten umfassen zum Beispiel biometrische Daten, wie Fingerabdruck, Iris-Scan, Netzhaut-Scan, Handvenen-Scan, Stimmprofil usw. "Nicht-übertragbar" bedeutet, dass die Information nicht - wie ein Passwort, Zahlencode, Chipkarte oder ähnliches - von Person zu Person weitergegeben werden kann. Vielmehr ist eine Fälschung derartiger nicht-übertragbarer Informationen extrem aufwändig, was die Zugangssicherheit zu Racks deutlich erhöht. Somit ist gewährleistet, dass ausschließlich eine Person Zugang zum Rack erhält, die für einen Zugang autorisiert ist. Die persönliche Zugangsidentifikation kann nicht auf einfache Weise an eine nichtautorisierte Person weitergegeben werden oder von dieser gestohlen werden.

Bevorzugt hat wenigstens ein Benutzer einer Sicherheits-Benutzergruppe Zugang zum Key-Computersystem zur Vergabe der Auftrags-Identifikation. Optional kann die Vergabe der Auftrags-Identifikation im Key-Computersystem auch nach einem Vier- oder Mehr-Augen-Prinzip erfolgen. Die Sicherheits-Benutzergruppe kann sich (oder muss sich vorteilhaft) von der Administrations-Benutzergruppe unterscheiden. In diesem Falle hat ein Administrator keinen Zugang zum Key-Computersystem und kann nicht (manipulativ) auf das Key-Computersystem zugreifen, um sich selbst eine Auftrags-Identifikation zu vergeben. Auf diese Weise ist ein zwingendes Mehrpersonen-System erforderlich.

Alternativ kann die Administrations-Benutzergruppe, unter Umständen eingeschränkt auf vorbestimmte Personen, Zugang zum Key-Computersystem zur Vergabe der Auftrags-Identifikation haben. Auch in diesem Fall ist ein erhöhtes Maß an Sicherheit gewährleistet, weil zwar ein Administrator theoretisch sich selbst eine Auftrags-Identifikation vergeben kann, jedoch jedes Mal, wenn ein Zugang zum Rack erwünscht oder erforderlich ist, eine entsprechende Auftrags-Identifikation generieren muss. Auf diese Weise wird, wie bereits oben erläutert, eine Dokumentation und Nachvollziehbarkeit vergebener Aufträge beziehungsweise durchgeführter Zugänge zum Rack sichergestellt. Auch in diesem Falle ist ein ungewollt freier Zugang eines Administrators zum Rack oder gar zu allen Computersystemen in einem gesamten Rechenzentrum unterbunden.

Vorteilhaft ist die Zugangskontrolleinheit am Ort des Racks eingerichtet. Die Zugangskontrolleinheit kann Bestandteil des Racks, das heißt darin integriert, sein. Alternativ ist die Zugangskontrolleinheit ein eigenes Sicherheitssystem, welches logisch und/oder physisch getrennt vom Rack eingerichtet ist, jedoch zur Steuerung des gesicherten Zugangs zum Rack mit diesem kommunizieren kann. Entscheidend ist, dass eine autorisierte Person ihre persönliche Zugangsidentifikation und die Auftrags-Identifikation am Ort des Racks vermittels der Zugangskontrolleinheit eingeben muss. Somit kann, gegebenenfalls unter Zuhilfenahme weiterer Zugangskontrollen (zum Beispiel Videosysteme, Schlüssel/Schloss-Systeme, etc.), sichergestellt werden, dass sich am Ort des Racks nur autorisierte Personen aufhalten und nicht nach einer erfolgreichen Autorisierung an der Zugangskontrolleinheit durch nicht-autorisierte Personen ausgetauscht werden.

Vorzugsweise wird das Verfahren der erläuterten Art neben dem ersten Administrator zumindest für einen zweiten Administrator der Administrations-Benutzergruppe durchgeführt. Dabei ist für den zweiten Administrator eine zweite Auftrags-Identifikation vorgesehen, die sich von der ersten Auftrags-Identifikation unterscheidet. Zudem ist eine zweite persönliche Zugangsidentifikation vorgesehen, die sich von der ersten persönlichen Zugangsidentifikation unterscheidet. Eine Freigabe des physischen Zugangssicherheitssystems für den Zugang der Administratoren zum Rack kann nur erfolgen, falls die Prüfschritte für beide Administratoren erfolgreich waren.

Dies hat den Vorteil, dass für die Administrations-Benutzergruppe ein Mehrpersonen-System gilt. Ein Administrator alleine kann das Verfahren nicht durchführen. Das Verfahren kann auch für mehr als zwei Administratoren aufgesetzt sein. Beispielsweise können wenigstens zwei Administratoren und eine Sicherheitsperson (aus wiederum einer weiteren Personengruppe) vorgesehen sein. Je mehr Personen am Verfahren beteiligt sein müssen, desto höher ist das Maß an gewährleisteter Sicherheit.

Vorzugsweise umfasst das Verfahren die zusätzlichen Schritte:
- Herstellen einer Auftrags-Beschreibung vermittels des Key-Computersystems zur vorbestimmten Durchführung des Zugangs des Administrators oder der Administratoren zum Rack,
- Übermittlung der Auftrags-Beschreibung sowohl an den Administrator oder die Administratoren als auch an eine Auftrags-Kontrolleinheit und
- Erwarten einer Bestätigung der Auftrags-Beschreibung durch den Administrator oder die Administratoren.

Durch die Auftragsbeschreibung können bestimmte Parameter zur Durchführung des Zugangs zum Rack festgelegt und dokumentiert werden. Diese bestimmen die Art und Weise, wie der Zugang zum Rack eingerichtet und durchgeführt wird, zum Beispiel Zeit, Dauer, Personengruppe, Sicherheitsmaßnahmen im Rack (zum Beispiel ein Sicherheits-Backup, Erstellen von Wiederherstellungspunkten, eine Verschlüsselung vertraulicher Daten, usw. in einem oder mehreren Produktions-Computersystemen im Rack). Die Auftrags-Beschreibung muss von dem Administrator oder den Administratoren zur Kenntnis genommen und bestätigt werden. Alternativ kann die Auftrags-Beschreibung auch allgemein an die Administrations-Benutzergruppe übermittelt und von dieser allgemein bestätigt werden.

Bevorzugt umfasst das Verfahren die zusätzlichen Schritte:
- Übermittlung der Auftrags-Identifikation vom Key-Computersystem an die Auftrags-Kontrolleinheit und
- Weitergabe der Auftrags-Identifikation von der Auftrags-Kontrolleinheit an die Zugangskontrolleinheit, falls die Bestätigung der Auftrags-Beschreibung durch den Administrator oder die Administratoren von der Auftrags-Kontrolleinheit empfangen wurde.

Die Auftrags-Identifikation wird vorteilhaft erst an die Zugangskontrolleinheit weitergegeben, wenn der Administrator oder die Administratoren die Auftrags-Beschreibung bestätigt hat beziehungsweise haben. Anderenfalls wird nichts dergleichen in der Zugangskontrolleinheit hinterlegt. Trotz Kenntnis der Auftrags-Identifikation durch den Administrator oder die Administratoren schlägt dann ein Zugang zum Rack fehl, weil positive Vergleichsinformationen nicht hinterlegt sind. Auch hier kann alternativ die Auftrags-Beschreibung allgemein von der Administrations-Benutzergruppe bestätigt werden. Ebenfalls alternativ oder ergänzend kann auch einfach nur eine Bestätigung des Auftrags als solchen verlangt werden, um die Auftrags-Identifikation von der Auftrags-Kontrolleinheit an die Zugangskontrolleinheit weiterzuleiten.

Generell soll durch die vorgenannten Maßnahmen sichergestellt werden, dass ein Administrator beziehungsweise Administratoren der Administrations-Benutzergruppe erst dann einen Zugang zum Rack erhalten, wenn sie den Auftrag als solchen, unter Umständen vermittels der Auftrags-Beschreibung, zur Kenntnis genommen haben und bestätigen. Auch dies erhöht die Sicherheit im vorgestellten Mehrinstanzen-Zugangsverfahren.

Vorteilhaft umfasst das Verfahren der erläuterten Art die zusätzlichen Schritte:
- Weitergabe der Auftrags-Beschreibung von der Auftrags-Kontrolleinheit an die Zugangskontrolleinheit, falls die Bestätigung der Auftrags-Beschreibung durch den Administrator oder die Administratoren von der Auftrags-Kontrolleinheit empfangen wurde,
- Prüfung der Gültigkeit des Zugangs des Administrators oder der Administratoren zum Rack durch die Zugangskontrolleinheit anhand der Auftrags-Beschreibung.

Diese weiteren Maßnahmen haben den Vorteil, dass anhand der Prüfung der Auftrags-Beschreibung die Zugangskontrolleinheit entscheiden kann, ob der Zugang situationsabhängig überhaupt möglich bzw. erlaubt ist. Auf diese Weise kann ein Zugang selbst dann verwehrt werden, wenn die persönliche Zugangsidentifikation des Administrators oder der Administratoren sowie die entsprechende Auftrags-Identifikation korrekt abgeprüft werden. Eine entsprechende Situation kann beispielsweise vorliegen, wenn ein vorgesehenes Sicherheits-Backup oder eine Verschlüsselung vertraulicher Daten oder sonstiges in einem oder mehreren Produktions-Computersystemen im Rack noch nicht durchgeführt wurden oder fertiggestellt wurden, sodass ein Zugang aufgrund anderer Aspekte als der notwendigen Zugangsinformationen nicht oder noch nicht möglich ist.

Auch in diesem Zusammenhang kann alternativ die Auftrags-Beschreibung allgemein von der Administrations-Benutzergruppe bestätigt werden.

Es sei angemerkt, dass entsprechend der Weitergabe der Auftrags-Beschreibung auch eine Weitergabe der persönlichen Zugangsidentifikation des Administrators oder der Administratoren von Key-Computersystem über die Auftrags-Kontrolleinheit an die Zugangskontrolleinheit nach Bestätigung durch den Administrator oder die Administratoren beziehungsweise die Administrations-Benutzergruppe in der Auftrags-Kontrolleinheit denkbar ist. Alternativ hierzu können die persönlichen Zugangsidentifikationen der entsprechenden Administratoren bereits in der Zugangskontrolleinheit vorgespeichert sein. Eine Weitergabe beziehungsweise ein Speichern der persönlichen Zugangsidentifikationen kann unter Umständen in verschlüsselter Form durchgeführt werden. Auf diese Weise wird gewährleistet, dass ein unbefugtes Abgreifen vertraulicher Zugangsidentifikationen durch unbefugte Dritte vermieden wird.

Vorteilhaft hat ein Benutzer einer Sicherheits-Benutzergruppe Zugang zum Key-Computersystem zum Erstellen der Auftrags-Beschreibung. Die Sicherheits-Benutzergruppe kann (oder sollte) sich von der Administrations-Benutzergruppe unterscheiden, analog wie oben erläutert. Das heißt, ein Administrator hat dann keinen Zugang zum Key-Computersystem und kann nicht (manipulativ) auf das Key-Computersystem zugreifen, um sich selbst eine Auftrags-Beschreibung zu seinen Gunsten zu definieren. Somit ist auch im Zusammenhang mit diesem Aspekt ein zwingendes Mehrpersonen-System erforderlich.

Alternativ kann auch ein Administrator der Administrations-Benutzergruppe Zugang zum Key-Computersystem zum Erstellen der Auftrags-Beschreibung erhalten. Auch in diesem Fall ist eine erhöhte Sicherheit dadurch gewährleistet, dass eine Auftrags-Beschreibung in jedem Fall erstellt und von Administratoren, die einen Zugang zum Rack wünschen, bestätigt werden muss, bevor entsprechende Auftrags-Identifikationen an die Zugangskontrolleinheit gemäß den oben erläuterten Maßnahmen weitergeleitet werden.

Bevorzugt umfasst die Auftrags-Beschreibung einen vorgegebenen Zeitraum für den Zugang zum Rack und/oder eine vorgegebene Zeitspanne der Freigabe des physischen Zugangssicherheitssystems des Racks. Zeitraum bedeutet ein Datum von ... bis ..., in dem ein Zugang prinzipiell möglich ist. Zeitspanne bedeutet die Dauer des Zugangs ab Beginn des Zugangs. Beispielhaft ist ein Zugang zwischen Montag 12 Uhr und Dienstag 12 Uhr eingerichtet, wobei die Zeitspanne des Zugangs eine Stunde beträgt. Das heißt, ein Zugang ist für eine Stunde zwischen Montag 12 Uhr und Dienstag 12 Uhr möglich. Auf diese Weise ist eine zeitlich begrenzte Autorisierung für einen Zugang zum Rack gewährleistet. Die Auftrags-Beschreibung definiert somit eine Art Sitzung mit vorgegebener Zeitdauer, innerhalb welcher eine Auftrags-Identifikation nur gültig für einen Zugang zum Rack eingegeben werden kann. Alternativ können die vorgenannten Merkmale auch in der Auftrags-Identifikation direkt anstelle der Auftrags-Beschreibung definiert sein.

Die Aufgabe wird in einem weiteren Aspekt durch eine Computernetz-Infrastruktur gelöst, umfassend:
- ein Key-Computersystem zum Erzeugen und Vergeben einer Auftrags-Identifikation, welche einen Auftrag an einen Administrator einer Administrations-Benutzergruppe für einen physischen Zugang zu einem Rack kennzeichnet,
- ein Rack,
- eine Zugangskontrolleinheit zum Erfassen und Prüfen der Auftrags-Identifikation sowie zum Erfassen und Prüfen einer persönlichen Zugangsidentifikation des Administrators sowie
- ein physisches Zugangssicherheitssystem, welches mit der Zugangskontrolleinheit für den gesteuerten Zugang des Administrators zum Rack in Abhängigkeit von einer erfolgreichen Prüfung der Auftrags-Identifikation sowie der persönlichen Zugangsidentifikation des Administrators gekoppelt ist.

Eine derartige Computernetz-Infrastruktur mit den vorgenannten Komponenten hat den Vorteil, dass ein Zugang zum Rack vermittels des physischen Zugangssicherheitssystems nur freigebbar ist, wenn in der Zugangskontrolleinheit sowohl eine persönliche Zugangsidentifikation des Administrators als auch eine von einer unabhängigen Instanz (Key-Computersystem) vergebene Auftrags-Identifikation erfolgreich prüfbar sind. Somit sieht die Computernetz-Infrastruktur Komponenten für einen gesicherten Zugriff auf die Hardware eines Racks (z.B. ein oder mehrere Produktions-Computersysteme) vor, welche derart eingerichtet sind, dass der Zugang von einer Kombination mehrerer Sicherheitsinformationen abhängig ist.

Das Key-Computersystem fungiert als Sicherheitsinstanz, welche eine Auftrags-Identifikation zum Kennzeichnen eines vorbestimmten, gegebenenfalls eingeschränkten Zugangs zu einem vorbestimmten Rack generieren und vergeben kann. Die Zugangskontrolleinheit ist eine weitere Sicherheitsinstanz, welche zum Erfassen und Prüfen der vom Key-Computersystem generierten Auftrags-Identifikation eingerichtet ist. Ferner dient die Zugangskontrolleinheit zum Erfassen und Prüfen einer persönlichen Zugangsidentifikation des Administrators als weitere Sicherheitsabfrage neben der Auftrags-Identifikation. Das physische Zugangssicherheitssystem ist derart eingerichtet, dass es erst freigeschaltet wird, wenn die Zugangskontrolleinheit sowohl die Auftrags-Identifikation als auch die persönliche Zugangsidentifikation des Administrators als gültig bewertet. Alternativ können hier auch mehrere Administratoren mit unterschiedlichen persönlichen Zugangsidentifikationen vorgesehen sein, wobei das physische Zugangssicherheitssystem erst freigeschaltet wird, wenn die Zugangskontrolleinheit neben der Auftrags-Identifikation auch sämtliche persönliche Zugangsidentifikationen der Administratoren als gültig bewertet.

Auf diese Weise kann eine Zugangskontrolle zu einem oder mehreren vorbestimmten Racks innerhalb eines Rechenzentrums gewährleistet werden. Das gesamte System verlangt somit mehrere Sicherheitsabfragen, die von getrennten Instanzen vorgehalten beziehungsweise vergeben werden. Dies erhöht die Sicherheit gegen unerlaubten Zugriff auf das Rack.

Vorzugsweise ist das Rack physisch, alternativ zusätzlich auch logisch getrennt vom Key-Computersystem eingerichtet. Auf diese Weise umfasst die Computernetz-Infrastruktur ein Mehrinstanzen-System, wobei gegebenenfalls unterschiedliche Benutzergruppen (Sicherheits-Benutzergruppe für das Key-Computersystem und Administrations-Benutzergruppe für das Rack) jeweils Zugriff auf die jeweiligen Instanzen haben. Das bedeutet, dass beispielsweise eine Sicherheits-Benutzergruppe Zugriff auf das Key-Computersystem, unter Umständen jedoch nicht auf das Rack hat. Entsprechend hat eine Administrations-Benutzergruppe Zugriff auf das Rack, unter Umständen jedoch nicht auf das Key-Computersystem. Auch dies erhöht die Sicherheit der Computernetz-Infrastruktur vorteilhaft.

Bevorzugt umfasst die Computernetz-Infrastruktur weiterhin eine Auftrags-Kontrolleinheit zum kontrollierten Erfassen und Weiterleiten der Auftrags-Identifikation von Key-Computersystem an die Zugangskontrolleinheit in Abhängigkeit von einer Bestätigung des Auftrags durch den Administrator. Wie oben bereits im Zusammenhang mit dem vorgestellten Verfahren erläutert, erfolgt bei einer derartig eingerichteten Auftrags-Kontrolleinheit eine Weitergabe der Auftrags-Identifikation in Abhängigkeit von einer Bestätigung des Auftrags durch den Administrator. Alternativ kann die Auftrags-Kontrolleinheit auch derart eingerichtet sein, dass Auftrags-Identifikationen, welche über das Key-Computersystem erzeugbar sind, in Abhängigkeit von einer Bestätigung einer generierten Auftrags-Beschreibung an die Zugangskontrolleinheit weitergeleitet werden. Alternativ ist denkbar, dass eine Bestätigung des Auftrags oder einer Auftrags-Beschreibung (wie oben erläutert) durch eine Administrations-Benutzergruppe allgemein erfolgt.

Vorteilhaft weist das Zugangssicherheitssystem der Computernetz-Infrastruktur wenigstens eines von
- elektronischen Schlössern für Gehäuse-Türen,
- Sensoren zur Überwachung der Gehäuse-Türen,
- Sensoren zur Erkennung von Einbruchsversuchen oder
- elektronische Schaltelemente zur Abschaltung der Energieversorgung im Falle eines unerlaubten physischen Zugriffs auf das Rack auf.

Die genannten Sicherheitskomponenten dienen zur physikalischen Absicherung des Racks gegen unbefugten Zugriff. In Kombination mit den weiteren Sicherheitskomponenten und -instanzen der Computernetz-Infrastruktur stellen die genannten Sicherheitskomponenten somit effektive Maßnahmen zur gesicherten Zugriffskontrolle auf das Rack dar.

Vorteilhaft ist die Computernetz-Infrastruktur derart eingerichtet, dass ein Verfahren gemäß der hier vorgestellten Art und Weise durchgeführt werden kann.

Sämtliche Vorteile, Maßnahmen und Vorgehensweisen im Zusammenhang mit den Verfahren sind auch im Rahmen der Computernetz-Infrastruktur der hier erläuterten Art anwendbar und gelten entsprechend. Umgekehrt gelten alle Vorteile und Einrichtungen der Computernetz-Infrastruktur auch im Zusammenhang mit einer Anwendung im hier erläuterten Verfahren. Alle Merkmale des Verfahrens sind auf die Computernetz-Infrastruktur anwendbar und umgekehrt.

Die Erfindung wird anhand einer Zeichnung im Weiteren näher erläutert.

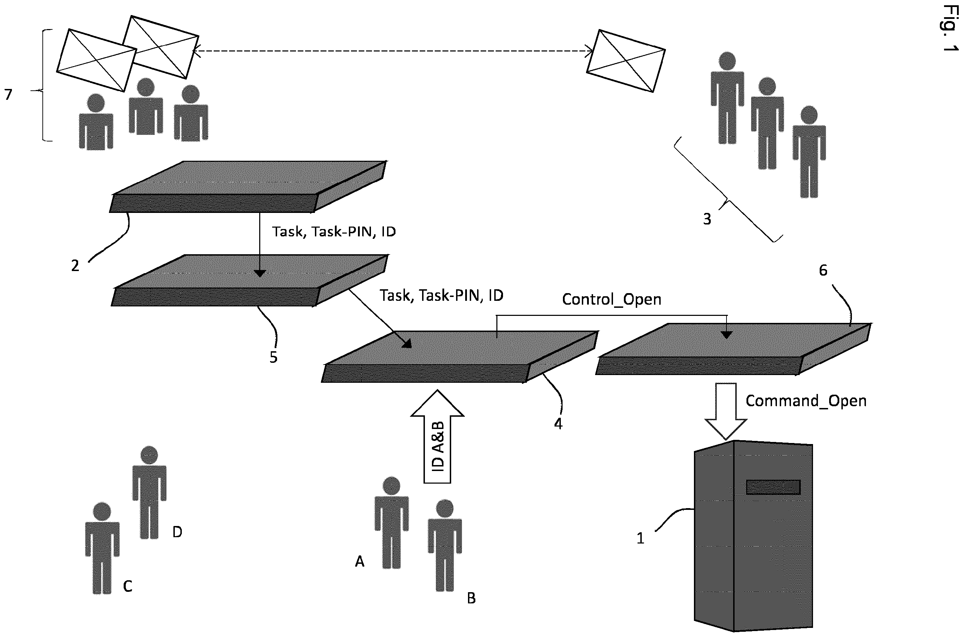

Die Figur zeigt eine schematisierte Anordnung mehrerer Sicherheitsinstanzen einer Computernetz-Infrastruktur zur Durchführung eines Verfahrens zum Zugang zu einem physisch abgesicherten Rack 1.

Das Rack 1 umfasst beispielsweise einen oder mehrere Rack-Server aus einer Vielzahl von Rack-Servern innerhalb eines Rechenzentrums (Serverfarm), wobei das Rack 1 durch verschiedene Sicherheitsmaßnahmen physisch gegen einen unerlaubten Zugriff abgesichert ist. Beispielsweise kann das Rack 1 elektronische Schlösser, Sensoren zur Überwachung der Türen des Racks 1, Sensoren zur Erkennung von Einbruchsversuchen und/oder elektronische Schalter zur Abschaltung des Racks 1 bzw. der darin aufgenommenen elektronischen Komponenten im Fall eines unerlaubten Zugriffs aufweisen. Der Einfachheit halber sind diese Komponenten jedoch nicht dargestellt.

Das Rack 1 kann beispielsweise ein oder mehrere Produktions-Computersysteme aufweisen, welche zur Datenverarbeitung von Daten innerhalb des Rechenzentrums dienen, wobei die Daten unter Umständen vertrauliche Benutzerdaten oder Kundendaten, etc. umfassen können. Daher ist es notwendig, dass das Rack 1 physisch vor unerlaubtem Zugriff auf die Hardware (zum Beispiel CPU, Festplatten, Speicherbänder, Arbeitsspeicher, Wechseldatenträger, I/O-Schnittstellen, usw.) abgesichert ist, welche innerhalb des Racks 1 untergebracht ist.

Für einen physischen Zugriff auf das Rack 1, das heißt beispielsweise für das Öffnen elektronischer Schlösser oder weiterer Sicherheitsbarrieren, sind mehrere Verfahrensschritte notwendig.

Zunächst sendet eine Administrations-Benutzergruppe 3 an eine Sicherheits-Benutzergruppe 7 eine Anfrage für einen Zugang zum Rack 1. Eine derartige Anfrage kann beispielsweise aus Wartungsgründen des Racks 1 gestellt werden. Zwischen der Administrations-Benutzergruppe 3 und der Sicherheits-Benutzergruppe 7, welche in der Figur getrennte Benutzergruppen darstellen, können zu diesem Zwecke unter Umständen iterativ mehrere Nachrichten, zum Beispiel via E-Mail, ausgetauscht werden (siehe Briefsymbole). Es ist alternativ aber auch denkbar, dass eine entsprechende Anfrage (Beauftragung) von anderer Stelle (nicht dargestellt) an die Sicherheits-Benutzergruppe 7 gestellt wird. Die Figur stellt hier nur eine von vielen denkbaren Möglichkeiten dar.

Es sei angemerkt, dass alternativ zur dargestellten Konfiguration auch eine einheitliche Benutzergruppe eingerichtet sein kann, wobei beispielsweise eine erste Person an eine weitere Person aus der Benutzergruppe eine Anfrage für einen Zugang zum Rack 1 aus Sicherheitsgründen stellen muss.

Der Vorteil einer Anfrage an eine weitere Person für einen Zugang zum Rack 1 ist dadurch gegeben, dass ein Mehrpersonen-System eingerichtet ist, sodass eine einzelne Person niemals alleine einen Zugang zum Rack 1 erwirken kann. Ein derartiges Prinzip ist auch als Vier-Augen- oder (im Falle mehrerer Personen) Mehr-Augen-Prinzip bekannt.

Ausgehend von der Konfiguration in der Figur entscheidet die Sicherheits-Benutzergruppe 7 auf eine Anfrage der Administrations-Benutzergruppe 3 hin, ob und auf welche Weise ein oder mehrere Administratoren A, B, C, D der Administrations-Benutzergruppe 3 einen Zugang zum Rack 1 erhalten oder nicht. Die Sicherheits-Benutzergruppe 7 hat gewissermaßen die Sicherheitsaufsicht über die Administratoren der Administrations-Benutzergruppe 3.

Für einen Zugang zum Rack 1 beschließt die Sicherheits-Benutzergruppe 7 beispielhaft, dass die Administratoren A und B der Administrations-Benutzergruppe 3 Zugang zum Rack 1 erhalten sollen. Gegebenenfalls teilt die Sicherheits-Benutzergruppe 7 dies durch eine Bestätigung an die Administrations-Benutzergruppe 3 mit.

Die Sicherheits-Benutzergruppe 7 hat Zugang zu einem Key-Computersystem 2 vermittels dessen Auftrags-Identifikationen, sogenannte Task-PINs, erzeugt und vergeben werden können, welche einen Auftrag an einen Administrator A, B, C, D der Administrations-Benutzergruppe 3 für einen Zugang zum Rack 1 kennzeichnen. Das bedeutet, dass durch die Task-PINs ein vorbestimmter, gegebenenfalls eingeschränkter Zugang zu einem vorbestimmten Rack 1 gekennzeichnet werden kann.

Ferner sind die Task-PINs unter Umständen personenbezogen, sodass vorbestimmte Administratoren A, B, C, D für einen Zugang zum Rack 1 festgelegt sind. Gerade bei einer Mehrzahl von Racks 1 kann der Zugang zu einem einzelnen Rack 1 vermittels einer speziellen vergebenen Task-PIN eingeschränkt werden. Zu anderen Racks 1 ist dann kein Zugang freigegeben.

Ferner haben die Task-PINs den Vorteil, dass durch sie eine Dokumentation der erteilten Aufträge beziehungsweise eine Nachvollziehbarkeit durchgeführter Zugänge zum Rack 1 im Key-Computersystem 2 durchgeführt werden kann.

Auf diese Weise fungiert das Key-Computersystem 2 als Sicherheits-Instanz, welche im Beispiel der Figur für die beiden Administratoren A und B jeweils eine Auftrags-Identifikation (Task-PIN) für einen vorbestimmten Zugang zum Rack 1 erstellt und vergibt. Vorteilhaft sind die beiden Task-PINs für die beiden Administratoren A und B unterschiedlich und personenbezogen. Die beiden Task-PINs beinhalten also die Information, dass ein Administrator A und zugleich ein Administrator B physischen Zugang zum Rack 1 haben sollen. Durch die Task-PINs ist das Rack 1 eindeutig als erwünschtes Rack gekennzeichnet. Ein Zugang zu möglichen anderen Racks (nicht dargestellt) wird durch die Task-PINs verboten.

Zudem wird im Key-Computersystem 2 eine Auftrags-Beschreibung (Task) erstellt, welche Informationen beziehungsweise Parameter zur vorbestimmten Durchführung des Zugangs der Administratoren A und B zum Rack 1 umfasst. Die Informationen beziehungsweise Parameter bestimmen beispielsweise die Art und Weise, wie der Zugang eingerichtet und durchgeführt wird, zum Beispiel Zeit, Dauer, Personengruppe, Sicherheitsmaßnahmen im Rack 1 (beispielsweise Sicherheits-Backup, Erstellen von Wiederherstellungspunkten, Verschlüsselung vertraulicher Daten, usw.). Somit legt der Task weitere Sicherheitsmerkmale fest, die neben der Task-PIN für einen Zugang zum Rack 1 vorlegen müssen. Im Task kann beispielsweise ein Zeitraum festgelegt sein, innerhalb dessen ein Zugang zum Rack 1 prinzipiell möglich ist. Ferner kann eine Zeitspanne definiert sein, welche die Dauer des Zugangs ab Beginn des Zugangs definiert. Zum Beispiel kann im Task definiert sein, dass ein Zugang zwischen Montag 12 Uhr und Dienstag 12 Uhr innerhalb einer Zeitspanne von einer Stunde zugelassen wird.

Als weiteres Sicherheitsmerkmal ist im Key-Computersystem 2 ferner jeweils eine persönliche Zugangsidentifikation (sogenannte ID) für sämtliche berechtigten Administratoren A, B, C, D der Administrations-Benutzergruppe 3 hinterlegt. Vorteilhaft umfasst die ID der Administratoren A, B, C, D nicht-übertragbare Personen-Kenndaten, wie zum Beispiel biometrische Daten (Fingerabdruck, Iris-Scan, Netzhaut-Scan, Handvenen-Scan, Stimmprofil, usw.).

In einem nächsten Schritt werden die Task-PINs, der Task sowie die persönlichen IDs der beiden Administratoren A und B vom Key-Computersystem 2 an eine Auftrags-Kontrolleinheit 5 übergeben. Gleichzeitig werden die Task-PINs sowie der Task vom Key-Computersystem 2 auch an die Administratoren A und B übermittelt.

Im weiteren Verfahrensablauf erwartet die Auftrags-Kontrolleinheit 5 schließlich eine Bestätigung der Informationen, welche an die Administratoren A und B übermittelt wurden seitens der beiden Administratoren A und B. Wenn die Auftrags-Kontrolleinheit 5 eine Bestätigung des Auftrags beziehungsweise der Task-PINs und/oder des Tasks seitens der beiden Administratoren A und B empfangen hat, dann sendet die Auftrags-Kontrolleinheit 5 alle Informationen (Task, Task-PIN sowie ID der Administratoren A und B) an eine Zugangskontrolleinheit 4.

Die Zugangskontrolleinheit 4 ist eine weitere Sicherheits-Instanz zur Abfrage und Prüfung einer Eingabe sowohl der vergebenen und übermittelten Task-PINs seitens der Administratoren A und B als auch zur Abfrage und Prüfung einer Eingabe der persönlichen IDs der Administratoren A und B. Die Zugangskontrolleinheit 4 ist vorteilhaft am Ort des Racks 1 eingerichtet.

Für einen Zugang zum Rack 1 müssen sich die beiden Administratoren A und B am Ort des Racks 1 an der Zugangskontrolleinheit 4 autorisieren. Hierzu gibt der Administrator A die ihm übermittelte Task-PIN an der Zugangskontrolleinheit 4 ein. Anschließend wird die Task-PIN des Administrators A in der Zugangskontrolleinheit 4 geprüft. Ferner gibt der Administrator A seine persönliche ID an der Zugangskontrolleinheit 4 ein (siehe Pfeil ID A&B). Auch die persönliche ID des Administrators A wird in der Zugangskontrolleinheit 4 geprüft. Das gleiche Verfahren macht Administrator B für seine Task-PIN und für seine persönliche ID.

Zur Eingabe der persönlichen ID, welche (wie oben erläutert) nicht-übertragbare Personen-Kenndaten umfassen kann, kann die Zugangskontrolleinheit 4 entsprechende Eingabemittel vorsehen. Wird beispielsweise ein Handvenen-Scan der Administratoren A und B erwartet, so ist in der Zugangskontrolleinheit 4 ein Handvenenscanner zur Identifikation der Administratoren A und B eingerichtet. Entsprechendes gilt beispielsweise für einen Netzhaut-Scanner oder Iris-Scanner oder einen Stimmenprofil-Erfasser.

Falls anstelle der Administratoren A und B beispielsweise die Administratoren C und D (als separate Gruppe in der Figur dargestellt) einen Zugang zum Rack 1 durchführen möchten, so scheitert dies. Zwar wären die Administratoren C und D grundsätzlich über ihre persönlichen IDs autorisiert, auf das Rack 1 zuzugreifen, allerdings haben die Administratoren C und D unter Umständen keine Kenntnis der Task-PINs der Administratoren A und B. Selbst wenn die Administratoren C und D Kenntnis der Task-PINs der Administratoren A und B hätten, so würde das System dennoch feststellen, dass die personenbezogen vergebenen Task-PINs für die Administratoren A und B nicht mit den persönlichen nicht-übertragbaren IDs der Administratoren C und D übereinstimmen (z.B. weil biometrische Merkmale der Administratoren A und B nicht auf C und D passen). Somit erkennt die Zugangskontrolleinheit 4, dass nicht die Personen einen Zugang zum Produktion-Computersystem 1 anfragen, für die die Task-PINs vom Key-Computersystem 2 vergeben wurden. In diesem Falle wird die Zugangskontrolleinheit 4 einen Zugang zum Rack 1 seitens der Administratoren C und D ablehnen.

Falls die Prüfung sowohl der Task-PINs der Administratoren A und B als auch der persönlichen IDs der Administratoren A und B erfolgreich ist, prüft die Zugangskontrolleinheit 4 in einem letzten Schritt, ob die Auftrags-Beschreibung (Task) eine Gültigkeit des Zugangs zum Rack 1 erlaubt oder nicht. Entsprechen die im Task definierten Parameter zur Durchführung des Zugangs zum Rack 1 der vorliegend erlaubten Situation, so kann ein Zugang zum Rack 1 gewährt werden.

Dazu sendet die Zugangskontrolleinheit 4 an eine Rack-Kontrolleinheit 6 eine Anweisung Control_Open zur Freigabe des physischen Zugangssicherheitssystems des Racks 1. Dies veranlasst wiederum die Rack-Kontrolleinheit 6, an das physische Zugangssicherheitssystem des Racks 1 einen Befehl Command_Open zur Freigabe des physischen Zugangssicherheitssystems zu senden. Durch den Befehl Command_Open werden beispielsweise elektronische Schlösser geöffnet, Sensoren zur Überwachung der Türen abgeschaltet oder in einen autorisierten Zugangsmodus versetzt, usw. Auf diese Weise ist nun für die beiden Administratoren A und B gemeinsam ein Zugang zum Rack 1, konkret ein physischer Zugriff auf die Hardware des gesicherten Racks 1 möglich. Die Administratoren A und B können beispielsweise Wartungsarbeiten am Rack 1 oder den darin aufgenommenen elektronischen Komponenten durchführen.

Es sei angemerkt, dass das erläuterte Verfahren gemäß der Zeichnung für zwei Administratoren A und B durchgeführt wird. Es ist auch denkbar, das Verfahren nur für einen Administrator oder alternativ für mehr als zwei Administratoren vorzusehen. Generell wird das Maß an Sicherheit erhöht, je mehr Personen in den Prozess eingebunden sind.

Die Konfiguration der dargestellten Computernetz-Infrastruktur ist lediglich beispielhaft gewählt und kann im Rahmen des Fachwissens eines Fachmanns auf diesem Gebiet selbstverständlich angepasst oder verändert werden, ohne vom Grundgedanken des hier erläuterten Verfahrens und der hier erläuterten Computernetz-Infrastruktur abzuweichen. Sämtliche Nomenklaturen sind lediglich beispielhaft.

### Bezugszeichenliste

- 1: Rack
- 2: Key-Computersystem
- 3: Administrations-Benutzergruppe
- 4: Zugangskontrolleinheit
- 5: Auftrags-Kontrolleinheit
- 6: Rack-Kontrolleinheit
- 7: Sicherheits-Benutzergruppe
- A, B, C, D: Administratoren
- Task: Auftrags-Beschreibung
- Task-PIN: Auftrags-Identifikation
- ID: persönliche Zugangsidentifikation
- Control_Open: Anweisung zur Freigabe des physischen Zugangssicherheitssystem
- Command_Open: Befehl zur Freigabe des physischen Zugangssicherheitssystems

## Patentansprüche

1. Verfahren zum Zugang zu einem physisch abgesicherten Rack (1), umfassend die folgenden Schritte:
- Vergabe einer Auftrags-Identifikation (task-PIN) vermittels eines Key-Computersystems (2), welche einen Auftrag an einen Administrator (A,B,C,D) einer Administrations-Benutzergruppe (3) für einen Zugang zum Rack (1) kennzeichnet,
- Übermittlung der Auftrags-Identifikation (task-PIN) vom Key-Computersystem (2) sowohl an den Administrator (A,B,C,D) als auch an eine Auftrags-Kontrolleinheit (5),
- Erwarten einer Bestätigung des Auftrags durch den Administrator (A,B,C,D) oder die Administrations-Benutzergruppe (3),
- Weitergabe der Auftrags-Identifikation (task-PIN) von der Auftrags-Kontrolleinheit (5) an eine Zugangskontrolleinheit (4) für das Rack (1), falls die Bestätigung des Auftrags durch den Administrator (A,B,C,D) oder die Administrations-Benutzergruppe (3) von der Auftrags-Kontrolleinheit (5) empfangen wurde,
- Abfrage einer Eingabe der Auftrags-Identifikation (task-PIN) durch die Zugangskontrolleinheit (4),
- Prüfung der eingegebenen Auftrags-Identifikation (task-PIN) durch die Zugangskontrolleinheit (4),
- Abfrage einer Eingabe einer persönlichen Zugangsidentifikation (ID) des Administrators (A,B,C,D) durch die Zugangskontrolleinheit (4),
- Prüfung der eingegebenen persönlichen Zugangsidentifikation (ID) des Administrators (A,B,C,D) durch die Zugangskontrolleinheit (4) und
- Freigabe eines physischen Zugangssicherheitssystems für den Zugang des Administrators (A,B,C,D) zum Rack (1), falls beide vorhergehenden Prüfschritte erfolgreich waren.

2. Verfahren nach Anspruch 1, wobei die persönliche Zugangsidentifikation (ID) des Administrators (A,B,C,D) nicht-übertragbare Personen-Kenndaten umfasst.

3. Verfahren nach Anspruch 1 oder 2, wobei ein Benutzer einer Sicherheits-Benutzergruppe (7) Zugang zum Key-Computersystem (2) zur Vergabe der Auftrags-Identifikation (task-PIN) hat.

4. Verfahren nach einem der Ansprüche 1 bis 3, wobei die Zugangskontrolleinheit (4) am Ort des Racks (1) eingerichtet ist.

5. Verfahren nach einem der Ansprüche 1 bis 4, wobei das Verfahren neben dem ersten Administrator (A,B,C,D) zumindest für einen zweiten Administrator (A,B,C,D) der Administrations-Benutzergruppe (3) durchgeführt wird, wobei für den zweiten Administrator (A,B,C,D) eine zweite Auftrags-Identifikation (task-PIN), die sich von der ersten Auftrags-Identifikation (task-PIN) unterscheidet, sowie eine zweite persönliche Zugangsidentifikation (ID), die sich von der ersten persönlichen Zugangsidentifikation (ID) unterscheidet, vorgesehen ist,
wobei eine Freigabe des physischen Zugangssicherheitssystems für den Zugang der Administratoren (A,B,C,D) zum Rack (1) nur erfolgt, falls die Prüfschritte für beide Administratoren (A,B,C,D) erfolgreich waren.

6. Verfahren nach einem der Ansprüche 1 bis 5, umfassend die zusätzlichen Schritte:
- Erstellen einer Auftrags-Beschreibung (task) vermittels des Key-Computersystems (2) zur vorbestimmten Durchführung des Zugangs des Administrators (A,B,C,D) oder der Administratoren (A,B,C,D) zum Rack (1),
- Übermittlung der Auftrags-Beschreibung (task) sowohl an den Administrator (A,B,C,D) bzw. die Administratoren (A,B,C,D) oder an die Administrations-Benutzergruppe (3) als auch an die Auftrags-Kontrolleinheit (5) und
- Erwarten einer Bestätigung der Auftrags-Beschreibung (task) durch den Administrator (A,B,C,D) bzw. die Administratoren (A,B,C,D) oder die Administrations-Benutzergruppe (3).

7. Verfahren nach Anspruch 6, umfassend den zusätzlichen Schritt:
- Weitergabe der Auftrags-Identifikation (task-PIN) von der Auftrags-Kontrolleinheit (5) an die Zugangskontrolleinheit (4), falls die Bestätigung der Auftrags-Beschreibung (task) durch den Administrator (A,B,C,D) bzw. die Administratoren (A,B,C,D) oder durch die Administrations-Benutzergruppe (3) von der Auftrags-Kontrolleinheit (5) empfangen wurde.

8. Verfahren nach Anspruch 6 oder 7, umfassend die zusätzlichen Schritte:
- Weitergabe der Auftrags-Beschreibung (task) von der Auftrags-Kontrolleinheit (5) an die Zugangskontrolleinheit (4), falls die Bestätigung der Auftrags-Beschreibung (task) durch den Administrator (A,B,C,D) bzw. die Administratoren (A,B,C,D) oder durch die Administrations-Benutzergruppe (3) von der Auftrags-Kontrolleinheit (5) empfangen wurde,
- Prüfung der Gültigkeit des Zugangs des Administrators (A,B,C,D) oder der Administratoren (A,B,C,D) zum Rack (1) durch die Zugangskontrolleinheit (4) anhand der Auftrags-Beschreibung (task).

9. Verfahren nach einem der Ansprüche 6 bis 8, wobei ein Benutzer einer Sicherheits-Benutzergruppe (7) Zugang zum Key-Computersystem (2) zum Erstellen der Auftrags-Beschreibung (task) hat.

10. Verfahren nach einem der Ansprüche 6 bis 9, wobei die Auftrags-Beschreibung (task) einen vorgegebenen Zeitraum für den Zugang zum Rack (1) und/oder eine vorgegebene Zeitspanne der Freigabe des physischen Zugangssicherheitssystems des Racks (1) und/oder Informationen über eine Personengruppe und/oder Sicherheitsmaßnahmen im Rack (1) umfasst.

11. Verfahren nach einem der Ansprüche 1 bis 10, wobei sämtliche im Key-Computersystem (2) generierten Informationen (task, task-PIN) signiert und/oder verschlüsselt werden.

12. Computernetz-Infrastruktur umfassend:
- ein Key-Computersystem (2) zum Erzeugen und Vergeben einer Auftrags-Identifikation (task-PIN), welche einen Auftrag an einen Administrator (A,B,C,D) einer Administrations-Benutzergruppe (3) für einen physischen Zugang zu einem Rack (1) kennzeichnet,
- ein Rack (1),
- eine Zugangskontrolleinheit (4) zum Erfassen und Prüfen der Auftrags-Identifikation (task-PIN) sowie zum Erfassen und Prüfen einer persönlichen Zugangsidentifikation (ID) des Administrators (A,B,C,D),
- eine Auftrags-Kontrolleinheit (5) zum kontrollierten Erfassen und Weiterleiten der Auftrags-Identifikation (task-PIN) vom Key-Computersystem (2) an die Zugangskontrolleinheit (4) in Abhängigkeit von einer Bestätigung des Auftrags durch den Administrator (A,B,C,D) oder die Administrations-Benutzergruppe (3) sowie
- ein physisches Zugangssicherheitssystem, welches mit der Zugangskontrolleinheit (4) für den gesteuerten Zugang des Administrators (A,B,C,D) zum Rack (1) in Abhängigkeit von einer erfolgreichen Prüfung der Auftrags-Identifikation (task-PIN) sowie der persönlichen Zugangsidentifikation (ID) des Administrators (A,B,C,D) gekoppelt ist.

13. Computernetz-Infrastruktur nach Anspruch 12, wobei das Zugangssicherheitssystem wenigstens eines von
- elektronischen Schlössern für Gehäuse-Türen,
- Sensoren zur Überwachung der Gehäuse-Türen,
- Sensoren zur Erkennung von Einbruchsversuchen oder
- Elektronische Schaltelemente zur Abschaltung der Energieversorgung im Falle eines unerlaubten physischen Zugriffs auf das Rack (1)
aufweist.

14. Computernetz-Infrastruktur nach Anspruch 12 oder 13, welche eingerichtet ist, ein Verfahren nach einem der Ansprüche 1 bis 11 durchzuführen.

## Claims

1. Method of accessing a physically secured rack (1) comprising the following steps:
- assigning a task identification (task PIN) by means of a key computer system (2), which specifies a task for an administrator (A, B, C, D) of an administration user group (3) for access to the rack (1);
- transmitting the task identification (task PIN) from the key computer system (2) both to the administrator (A, B, C, D) and to a task control unit (5);
- waiting for a confirmation of the task by the administrator (A, B, C, D) or the administration user group (3),
- forwarding the task identification (task PIN) from the task control unit (5) to an access control unit (4) for the rack (1), if the confirmation of the task by the administrator (A, B, C, D) or the administration user group (3) was received by the task control unit (5),
- requesting an input of the task identification (task PIN) by the access control unit (4);
- verifying the input task identification (task PIN) by the access control unit (4);
- requesting an input of a personal access identification (ID) of the administrator (A, B, C, D) by the access control unit (4);
- verifying the input personal access identification (ID) of the administrator (A, B, C, D) by the access control unit (4); and
- unblocking a physical access security system for the access of the administrator (A, B, C, D) to the rack (1) if both previous verification steps were successful.

2. Method according to claim 1, wherein the personal access identification (ID) of the administrator (A, B, C, D) comprises non-transferable personal identification data.

3. Method according to claim 1 or 2, wherein a user of a security user group (7) has access to the key computer system (2) to assign the task identification (task PIN).

4. Method according to one of claims 1 to 3, wherein the access control unit (4) is set-up at the location of the rack (1) .

5. Method according to one of claims 1 to 4, wherein the method is performed at least for a second administrator (A, B, C, D) of the administration user group (3) besides a first administrator (A, B, C, D), wherein a second task identification (task PIN) different from the first task identification (task PIN), as well as a second personal access identification (ID) different from the first personal access identification (ID), is provided for the second administrator (A, B, C, D),
wherein an unblocking of the physical access security system for access of the administrators (A, B, C, D) to the rack (1) occurs only if the verification steps were successful for both administrators (A, B, C, D).

6. Method according to one of claims 1 to 5, comprising the additional steps of:
- creating a task description (task) by means of the key computer system (2) for the predefined implementation of access of the administrator (A, B, C, D) or the administrators (A, B, C, D) to the rack (1),
- transmitting the task description (task) to the administrator (A, B, C, D) or administrators (A, B, C, D) or to the administration user group (3), as well as to the task control unit (5), and
- waiting for a confirmation of the task description (task), by the administrator (A, B, C, D) or the administrators (A, B, C, D) or the administration user group (3).

7. Method according to claim 6, comprising the additional step of:
- forwarding the task identification (Task PIN) from the task control unit (5) to the access control unit (4) if the confirmation of the task description (task) by the administrator (A, B, C, D) or administrators (A, B, C, D) or the administration user group (3) is received from the task control unit (5).

8. Method according to claim 6 or 7, comprising the additional steps of:
- transferring the task description (task) from the task control unit (5) to the access control unit (4) if the confirmation of the task description (task) was received by the administrator (A, B, C, D) or the administrators (A, B, C, D) or by the administration user group (3) from the task control unit (5);
- verifying validity of the access of the administrator (A, B, C, D) or the administrators (A, B, C, D) to the rack (1) by the access control unit (4), using the task description (task).

9. Method according to one of claims 6 to 8, wherein a user of a security user group (7) has access to the key computer system (2) for the creation of the task description (task).

10. Method according to one of claims 6 to 9, wherein the task description (task) includes a predetermined time period for the access to the rack (1) and/or a predetermined time span for the unblocking of the physical access security system of the rack (1) and/or information about a group of persons and/or security measures in the rack (1).

11. Method according to one of claims 1 to 10, wherein all information (task, task PIN) generated in the key computer system (2) are signed and/or encrypted.

12. Computer network infrastructure, comprising:
- a key computer system (2) for generating and assigning and assigns a task identification (task PIN) which specifies a task for an administrator (A, B, C, D) of an administration user group (3) for physical access to a rack (1),
- a rack (1),
- an access control unit (4) for the detection and verification of the task identification (task PIN) as well as for the detection and verification of a personal access identification (ID) of the administrator (A, B, C, D);
- a task control unit (5) for the controlled detection and forwarding of the task identification (task PIN) from the key computer system (2) to the access control unit (4) depending on a confirmation of the task by the administrator (A, B, C, D) or the administration user group (3), as well as
- a physical access security system coupled to the access control unit (4) for controlled access of the administrator (A, B, C, D) to the rack (1) depending on a successful verification of the task identification (task PIN) as well as of the personal access identification (ID) of the administrator (A, B, C, D).

13. Computer network infrastructure according to claim 12, wherein the access security system comprises at least one of
- electronic locks for casing doors,
- sensors for monitoring the casing doors,
- sensors for identifying attempts to break-in, or
- electronic switch elements for the switch-off of the energy supply in the event of non-authorized physical access to the rack (1).

14. Computer network infrastructure according to claim 12 or 13, which is configured to perform a method according to any one of claims 1 to 11.

## Revendications

1. Procédé servant à accéder à un rack (1) protégé physiquement, comprenant les étapes suivantes :
- attribution d'une identification de tâche (task-PIN) au moyen d'un système informatique clé (2), laquelle caractérise une tâche donnée à un administrateur (A, B, C, D) d'un groupe d'utilisateurs d'administration (3) pour un accès au rack (1),
- transmission de l'identification de tâche (task-PIN) à partir du système informatique clé (2) à la fois à l'administrateur (A, B, C, D) et à l'unité de contrôle de tâche (5),
- attente d'une confirmation de la tâche par l'administrateur (A, B, C, D) ou le groupe d'utilisateurs d'administration (3),
- transfert de l'identification de tâche (task-PIN) à partir de l'unité de contrôle de tâche (5) à une unité de contrôle d'accès (4) pour le rack (1) si la confirmation de la tâche par l'administrateur (A, B, C, D) ou le groupe d'utilisateurs d'administration (3) a été reçue par l'unité de contrôle de tâche (5),
- interrogation d'une saisie de l'identification de tâche (task-PIN) par l'unité de contrôle d'accès (4),
- vérification de l'identification de tâche (task-PIN) saisie par l'unité de contrôle d'accès (4),
- interrogation d'une saisie d'une identification d'accès personnelle (ID) de l'administrateur (A, B, C, D) par l'unité de contrôle d'accès (4),
- vérification de l'identification d'accès personnelle (ID) de l'administrateur (A, B, C, D) par l'unité de contrôle d'accès (4), et
- déblocage d'un système de sécurité d'accès physique pour l'accès de l'administrateur (A, B, C, D) au rack (1) si les deux étapes de vérification précédentes ont été réalisées avec succès.

2. Procédé selon la revendication 1, dans lequel l'identification d'accès personnelle (ID) de l'administrateur (A, B, C, D) comprend des données caractéristiques de personnes non transmissibles.

3. Procédé selon la revendication 1 ou 2, dans lequel un utilisateur d'un groupe d'utilisateurs de sécurité (7) a accès au système informatique clé (2) afin d'attribuer l'identification de tâche (task-PIN).

4. Procédé selon l'une quelconque des revendications 1 à 3, dans lequel l'unité de contrôle d'accès (4) est installée à l'emplacement du rack (1).

5. Procédé selon l'une quelconque des revendications 1 à 4, dans lequel le procédé est effectué outre le premier administrateur (A, B, C, D) au moins pour un deuxième administrateur (A, B, C, D) du groupe d'utilisateurs d'administration (3), dans lequel sont prévues pour le deuxième administrateur (A, B, C, D) une deuxième identification de tâche (task-PIN), qui est différente de la première identification de tâche (task-PIN), ainsi qu'une deuxième identification d'accès personnelle (ID), qui est différente de la première identification d'accès personnelle (ID),
dans lequel un déblocage du système de sécurité d'accès physique est effectué pour l'accès des administrateurs (A, B, C, D) au rack (1) seulement si les étapes de vérification pour les deux administrateurs (A, B, C, D) ont été réalisées avec succès.

6. Procédé selon l'une quelconque des revendications 1 à 5, comprenant les étapes supplémentaires :
- de création d'une description de tâche (task) au moyen du système informatique clé (2) pour mettre en œuvre de manière prédéfinie l'accès de l'administrateur (A, B, C, D) ou des administrateurs (A, B, C, D) au rack (1),
- de transmission de la description de tâche (task) à la fois à l'administrateur (A, B, C, D) ou aux administrateurs (A, B, C, D) ou au groupe d'utilisateurs d'administration (3) et à l'unité de contrôle de tâche (5), et
- d'attente d'une confirmation de la description de tâche (task) par l'administrateur (A, B, C, D) ou les administrateurs (A, B, C, D) ou le groupe d'utilisateurs d'administration (3).

7. Procédé selon la revendication 6, comprenant l'étape supplémentaire :
- de transfert de l'identification de tâche (task-PIN) par l'unité de contrôle de tâche (5) à l'unité de contrôle d'accès (4) si la confirmation de la description de tâche (task) par l'administrateur (A, B, C, D) ou les administrateurs (A, B, C, D) ou par le groupe d'utilisateurs d'administration (3) a été reçue par l'unité de contrôle de tâche (5).

8. Procédé selon la revendication 6 ou 7, comprenant les étapes supplémentaires :
- de transfert de la description de tâche (task) par l'unité de contrôle de tâche (5) à l'unité de contrôle d'accès (4) si la confirmation de la description de tâche (task) par l'administrateur (A, B, C, D) ou les administrateurs (A, B, C, D) ou par le groupe d'utilisateurs d'administration (3) a été reçue par l'unité de contrôle de tâche (5),
- de vérification de la validité de l'accès de l'administrateur (A, B, C, D) ou des administrateurs (A, B, C, D) au rack (1) par l'unité de contrôle d'accès (4) à l'aide de la description de tâche (task).

9. Procédé selon l'une quelconque des revendications 6 à 8, dans lequel un utilisateur d'un groupe d'utilisateurs de sécurité (7) a accès au système informatique clé (2) pour créer la description de tâche (task).

10. Procédé selon l'une quelconque des revendications 6 à 9, dans lequel la description de tâche (task) comprend une durée prédéfinie pour l'accès au rack (1) et/ou un laps de temps prédéfini du déblocage du système de sécurité d'accès physique du rack (1) et/ou des informations portant sur un groupe de personnes et/ou des mesures de sécurité dans le rack (1).

11. Procédé selon l'une quelconque des revendications 1 à 10, dans lequel toutes les informations (task, task-PIN) générées dans le système informatique clé (2) sont signées et/ou cryptées.

12. Infrastructure de réseau informatique comprenant :
- un système informatique de clé (2) servant à générer et à attribuer une identification de tâche (task-PIN), laquelle caractérise une tâche donnée à un administrateur (A, B, C, D) d'un groupe d'utilisateurs d'administration (3) pour un accès physique à un rack (1),
- un rack (1),
- une unité de contrôle d'accès (4) servant à détecter et à vérifier l'identification de tâche (task-PIN) ainsi que servant à détecter et à vérifier une identification d'accès personnelle (ID) de l'administrateur (A, B, C, D)
- une unité de contrôle de tâche (5) servant à détecter et à transférer de manière contrôlée l'identification de tâche (task-PIN) depuis le système informatique clé (2) à l'unité de contrôle d'accès (4) en fonction d'une confirmation de la tâche par l'administrateur (A, B, C, D) ou le groupe d'utilisateurs d'administration (3), ainsi
- qu'un système de sécurité d'accès physique, lequel est couplé à l'unité de contrôle d'accès (4) pour l'accès commandé de l'administrateur (A, B, C, D) au rack (1) en fonction d'une vérification réalisée avec succès de l'identification de tâche (task-PIN) ainsi que de l'identification d'accès personnelle (ID) de l'administrateur (A, B, C, D).

13. Infrastructure de réseau informatique selon la revendication 12, dans laquelle le système de sécurité d'accès présente au moins un parmi
- des verrous électroniques pour des portes de maison,
- des capteurs servant à surveiller des portes de maison,
- des capteurs servant à identifier des tentatives d'effraction ou
- des éléments de commutation électroniques servant à désactiver l'alimentation en énergie dans le cas d'un accès physique non permis au rack (1).

14. Infrastructure de réseau informatique selon la revendication 12 ou 13, laquelle est configurée pour réaliser un procédé selon l'une quelconque des revendications 1 à 11.
